# EUROPÄISCHE PATENTANMELDUNG

(11) **EP 3 875 325 A1**
(43) Veröffentlichungstag der Anmeldung: **08.09.2021**
(21) Anmeldenummer: 21159838.8
(22) Anmeldetag: 01.03.2021
(51) Int. Cl.: B60W 30/12, B60W 30/09, B60W 30/02, B60W 50/08

(54) **VERFAHREN ZUR UNTERSTÜTZUNG EINES FAHRERS MITTELS EINES FAHRERUNTERSTÜTZUNGSSYSTEMS MITTELS KORRIGIERTER FAHRERSIGNALE FÜR EIN FAHRDYNAMIKREGELUNGSSYSTEM**

(30) Priorität: 02.03.2020 DE 102020202669
(71) Anmelder: Continental Engineering Services GmbH, 60489 Frankfurt (DE)
(72) Erfinder: van Lier, Volker, 60488 Frankfurt am Main (DE); Pithan, Bernd, 60488 Frankfurt am Main (DE); Eitel, Florian, 60488 Frankfurt am Main (DE)
(74) Vertreter: Continental Corporation

(57) **Zusammenfassung**

Die Erfindung betrifft ein Verfahren zur Unterstützung eines Fahrers (G) mittels eines Fahrerunterstützungssystems, wobei das Fahrerunterstützungssystem Eingabeinformationen des Fahrers und/oder Fahrervorgaben als Fahrersignale (A) in einer Fahrerunterstützungseinheit (1) auswertet und verarbeitet und korrigierte Fahrersignale (B) bereitstellt,
falls die Fahrerunterstützungseinheit (1) eine Korrekturrandbedingung (F) als erfüllt bewertet,
wobei die Fahrerunterstützungseinheit (1) zur Auswertung der Korrekturrandbedingung (F) und zur Erzeugung der korrigierten Fahrersignale (B) die Beobachtersignale (C, D, E) einer Beobachtereinheit nutzt, wobei die Beobachtersignale (C, D, E) abhängig sind von der aktuellen durch Fahrzeugsensoren erfassten Fahrzustandssituation und/oder wenigstens einer Fahrspurverlaufsinformation,
wobei die korrigierten Fahrersignale (B) einem Fahrdynamikregelungssystem (3) des Fahrzeugs bereit gestellt werden.

## Beschreibung

Die Erfindung betrifft ein Verfahren für ein Fahrerunterstützungssystem sowie das Fahrerunterstützungssystem selbst.

Es sind Fahrdynamikregelungssysteme, wie beispielweise ein elektronisches Stabilitätsprogramm bekannt. Diese können aktiv über Aktoren, auf Basis von Sensorinformationen in die Fahrdynamik eines Fahrzeugs bzw. Kraftfahrzeugs eingreifen können, in Abhängigkeit von Fahrersignalen, welche den Fahrerwunsch abbilden. Bedingt durch Stress, herausfordernde Umgebungsbedingungen oder komplexe Fahraufgaben kann der Fahrer überfordert sein. In diesem Fall muss der Fahrerwunsch nicht unbedingt den optimalen Sollwert repräsentieren. Die Fahrdynamikregelsysteme werden in diesem Fall nicht die optimalen Maßnahmen ergreifen können, um insbesondere die machbare Fahrsicherheit zu gewährleisten.

Die Erfindung hat sich die Aufgabe gestellt ein Verfahren bzw. ein Fahrerunterstützungssystem vorzuschlagen, welches die Sicherheit verbessert und/oder eine verbesserte Fahrdynamikregelung erreicht bzw. mögliche Fahrerfehleingaben abmildert und/oder korrigiert.

Diese Aufgabe wird erfindungsgemäß gelöst durch das Verfahren nach Anspruch 1 sowie ein Fahrerunterstützungssystem gemäß Anspruch 7.

Bevorzugtes Verfahren zur Unterstützung eines Fahrers mittels eines Fahrerunterstützungssystems, wobei das Fahrerunterstützungssystem Eingabeinformationen des Fahrers und/oder Fahrervorgaben als Fahrersignale in einer Fahrerunterstützungseinheit auswertet und verarbeitet und korrigierte Fahrersignale bereitstellt,
falls die Fahrerunterstützungseinheit eine Korrekturrandbedingung als erfüllt bewertet,
wobei die Fahrerunterstützungseinheit zur Auswertung der Korrekturrandbedingung und zur Erzeugung der korrigierten Fahrersignale die Beobachtersignale einer Beobachtereinheit nutzt, wobei die Beobachtersignale abhängig sind von der aktuellen durch Fahrzeugsensoren, insbesondere einer oder mehrerer Fahrzeugsensoren eines ESP bzw. elektronischen Stabilitätsprogramms, erfassten Fahrzustandssituation und/oder einer Fahrspurverlaufsinformationen, welche insbesondere aus Positionsdaten und Kartendaten gewonnen wird,
wobei die korrigierten Fahrersignale einem Fahrdynamikregelungssystem des Fahrzeugs bereit gestellt werden.

Zweckmäßigerweise wird unter einer Fahrspurverlaufsinformationen Geometrie und/oder die Topologie und/oder die Fahrbahnbeschaffenheit bzw. Fahrbahneigenschaften, insbesondere der Reibwert der Fahrbahnoberfläche, der Fahrspur verstanden, insbesondere hinsichtlich des Fahrbahnverlaufs, welcher in Fahrrichtung des Fahrzeugs vor dem Fahrzeug liegt, besonders bevorzugt innerhalb eines definierten Distanzintervall vom Fahrzeug.

Unter der Korrekturrandbedingung wird vorzugsweise die Information bzw. Bedingung verstanden, ob die Fahrerwunschtrajektorie des Fahrzeugs, basierend auf den Fahrersignalen, zu einem Verlassen der Fahrspur und/oder Überschreitung der Fahrspurbegrenzung durch das Fahrzeug führen würde und/oder ob das Fahrzeug in eine definierte/ potentiell gefährliche Fahrsituation kommen würde, beispielsweise wenn die Fahrerwunschtrajektorie in Kombination mit einer definierten Mindestgeschwindigkeit des Fahrzeugs auf ein Hindernis treffen würde.

Bevorzugt wird die Überprüfung der Korrekturrandbedingung in der Fahrerunterstützungseinheit durchgeführt oder alternativ vorzugsweise in der Beobachtungseinheit.

Vorzugsweise umfassen die Fahrersignale den Lenkwinkel/ eine Lenkwinkelinformation, insbesondere bereitgestellt durch einen Lenkwinkelsensor, und/oder ein Lenkmoment/ eine Lenkmomentinformation, insbesondere bereitgestellt durch einen Lenkmomentsensor, und/oder eine Gaspedalstellungsinformation, insbesondere bereitgestellt durch einen Gaspedalweg-/winkelsensor, und/oder eine Bremspedalstellungsinformation, insbesondere bereitgestellt durch einen Bremspedalweg-/winkelsensor, und/oder eine Information, ob das Fahrerunterstützungssystem aktiviert ist. Die Information, ob das Fahrerunterstützungssystem aktiviert ist, berücksichtigt insbesondere, ob das Fahrerunterstützungssystem durch den Fahrer manuell aktiviert oder deaktiviert ist und/oder ob es durch eine Fahrdynamiksituation selbstständig aktiviert ist.

Die korrigierten Fahrersignale umfassen zweckmäßigerweise durch die Fahrerunterstützungseinheit angepasste bzw. geänderte bzw. korrigierte Signale/ Informationen, insbesondere umfassend einen korrigierten Lenkwinkel/ eine korrigierte Lenkwinkelinformation und/oder ein korrigiertes Lenkmoment/ eine korrigierte Lenkmomentinformation und/oder eine korrigierte Gaspedalstellungsinformation und/oder eine korrigierte Bremspedalstellungsinformation. Diese korrigierten Informationen bzw. korrigierten Fahrersignale sind insbesondere so angepasst bzw. durch die Fahrerunterstützungseinheit berechnet, dass das Fahrdynamikregelungssystem eine hinsichtlich der von diesem System zu erzielenden Wirkung der Fahrdynamikregelung optimiert sind und besonders bevorzugt mögliche unerwünschte bzw. die Fahrdynamik und/oder die Fahrzeugsicherheit, insbesondere signifikant, verschlechternde Fahrereingriffe, erfasst und bereitgestellt, mittels der Fahrersignale, korrigiert. Beispielsweise können solche die Fahrdynamik bzw. die Fahrzeugsicherheit signifikant verschlechternde Fahrereingriffe durch hektische/ panische Fahrereingriffe in fahrdynamischen Extremsituationen herbeigeführt werden. Die Fahrzeugsicherheit kann dabei besonders bevorzugt hinsichtlich eines Verlassens der Fahrbahn bzw. der entsprechenden Trajektorie in Kombination mit der Fahrzeuggeschwindigkeit beurteilt werden.

Unter einem Fahrdynamikregelungssystem wird bevorzugt ein Antiblockiersystem und/oder eine Antriebsschlupfsystem und/oder ein elektronisches Stabilitätsprogramm bzw. ESP und/oder eine Fahrerassistenzsystem, wie beispielsweise ein Notbremsassistenzsystem und/oder ein Abstandshaltesystem und/oder eine Spurhalte-/ bzw. Spurwechselassistenzsystem verstanden. Insbesondere ist das Fahrdynamikregelungssystem so ausgebildet, dass es einen aktiven bzw. selbstständigen Fahrdynamikeingriff durchführt, zweckmäßigerweise auf Basis der Fahrersignale und von Beobachtungssignalen.

Es ist bevorzugt, dass die Beobachtereinheit Kartendaten und/oder Navigationsdaten zum Fahrspurverlauf aufweist und/oder ihr bereitgestellt werden und dass eine GPS Position des Fahrzeugs der Beobachtereinheit bereitgestellt wird, wobei zusätzlich insbesondere wenigstens eine Fahrbahneigenschaftsinformation von einer zusätzlichen Sensor- und/oder Auswerteeinheit und/oder von einem Netzwerkdienst bereitgestellt wird.

Es ist zweckmäßig, dadurch gekennzeichnet, dass die Fahrerunterstützungseinheit aus den Daten und Informationen der Beobachtereinheit ein Fahrspurbegrenzungsmodell und/oder einen Fahrspurrandverlauf berechnet und im Zuge der Beurteilung der Korrekturrandbedingung prüft, ob die aktuell mittels der Fahrersignale vom Fahrer bestimmte Fahrerwunschtrajektorie des Fahrzeugs zu einem Verlassen der Fahrspur und/oder Überschreitung der Fahrspurbegrenzung führen würde, wenn dies der Fall ist, liegt die Korrekturrandbedingung vor und die Fahrerunterstützungseinheit berechnet/ erzeugt korrigierte Fahrersignale und wenn die Korrekturrandbedingung nicht vorliegt, werden keine korrigierten Fahrersignale berechnet/ erzeugt, sondern die ursprünglichen Fahrersignale werden dem Fahrdynamikregelungssystem bereitgestellt.

Die korrigierten Fahrersignale in der Fahrerunterstützungseinheit werden vorzugsweise so berechnet/ erzeugt, dass die aktuelle Trajektorie des Fahrzeugs im Wesentlichen auf die Mitte der Fahrspur oder einem mittleren Fahrspurband weist und dabei insbesondere das Fahrdynamikregelungssystem mittels der korrigierten Fahrersignale das Fahrzeug im Wesentlichen auf der Fahrspur hält.

Es ist bevorzugt, dass das Fahrerunterstützungssystem so ausgebildet ist, dass mittels einer definierten Fahrerüberstimmungeingabe die Fahrerunterstützungseinheit deaktiviert werden kann, insbesondere jederzeit. Besonders bevorzugt ist die Fahrerüberstimmungeingabe mittels der Betätigung eines Kopfes eingebbar ist.

Es ist bevorzugt, dass die Überprüfung der Korrekturrandbedingung in der Fahrerunterstützungseinheit zyklisch und/oder kontinuierlich erfolgt und wenn die Fahrersignale eine definierte Anzahl an Zyklen oder einen definierten Zeitraum und/oder nach einem Eingriff des Fahrdynamikregelungssystems basierend auf korrigierten Fahrersignalen, der Fahrer Fahrersignale verursacht, welche die Korrekturrandbedingung erfüllen, dass dann die Fahrerunterstützungseinheit deaktiviert wird.

Die Fahrerunterstützungseinheit ist vorzugsweise so ausgebildet, dass diese erst ab einer definierten Mindestgeschwindigkeit, beispielsweise ab 15km/h aktiv ist.

Das Fahrdynamikregelungssystem ist zweckmäßigerweise so ausgebildet, dass es zumindest die Geschwindigkeit in Fahrtrichtung mittels jeweils einem Raddrehzahlsensor pro Rad auswertet und/oder eine Querbeschleunigung mittels eines Querbeschleunigungssensors auswertet und/oder eine Gierrate um die Fahrzeughochachse mittels eines Drehratensensors auswertet, und/oder den fahrerseitigen Lenkeinschlag mittels eines Lenkwinkelsensors auswertet. Das Fahrdynamikregelungssystem steuert dabei vorzugsweise die Bremse jeden Rades an oder ist dazu in der Lage und regelt den Gierwinkel des Fahrzeugs ein.

Es ist bevorzugt, dass das Fahrerunterstützungssystem seine Bestandteile als Softwareprogrammprodukt ausgebildet ist, welches auch einer oder mehreren elektronischen Kontrolleinheiten ausgeführt wird, insbesondere verteilt.

Bevorzugt ist die Fahrerunterstützungseinheit nur dann aktiv, wenn alle der folgenden Bedingungen bzw. Anforderungen erfüllt sind
- Keine Deaktivierung bzw. Fahrerüberstimmungeingabe durch den Fahrer,
- Verfügbarkeit der Daten der Fahrzeugposition und Orientierung,
- Verfügbarkeit der Daten über den Straßenverlauf und/oder das Fahrziel,
- Verfügbarkeit von Informationen zu Umgebungsbedingungen des Fahrzeugs, wie beispielsweise Reibwert und Beschaffenheit der Fahrbahnoberfläche,
- der für ESC Systeme üblicherweise verfügbaren Sensorinformationen
- verfügbare Aktuatoren und Regelsysteme des Fahrdynamikregelungssystems.

Die Fahrersignale umfassen vorzugsweise folgende Eingabeinformationen des Fahrers und/oder Fahrervorgaben: Lenkradeinschlag bzw. Lenkwinkel, Fahrpedal- bzw- Gaspedalstellung, Bremspedalstellung und insbesondere eine mögliche separate Aktivierung der Fahrerunterstützungseinheit.

### Bezugszeichen

1 Fahrerunterstützungseinheit
2 Beobachtereinheit
3 Fahrdynamikregelungssystem
A Fahrersignale
B korrigierte Fahrersignale
C Kartendaten und Navigationsdaten zum Fahrspurverlauf
D GPS Position
E Fahrbahneigenschaftsinformation
F Fahrer
W Straße
Y Fahrdynamik

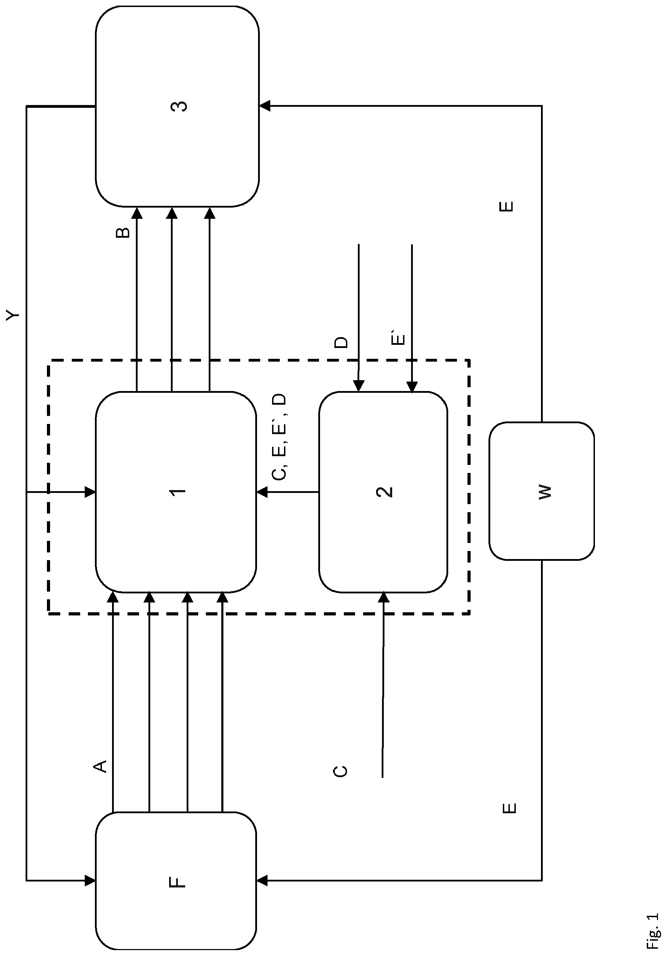

Fig. 1 zeigt beispielhaft und schematisch Elemente des Verfahrens und des Fahrerunterstützungssystems.
Der Fahrer F gibt Fahrersignale A vor, welche normalerweise für das Fahrdynamikregelungssystem 3 verwendet werden. Diese Fahrersignale A umfassen beispielhaft den Lenkwinkel und/oder die ein Lenkmoment und/oder eine Gaspedalstellungsinformation und/oder eine Bremspedalstellungsinformation und/oder eine Information, ob das Fahrerunterstützungssystem aktiviert ist. Diese werden nun mittels der Beobachtereinheit B, welche beispielgemäß Kartendaten und/oder Navigationsdaten C zum Fahrspurverlauf, eine GPS Position des Fahrzeugs sowie zusätzlich eine Fahrbahneigenschaftsinformation für eine Auswertung einer Korrekturrandbedingung auswertet, in der Fahrerunterstützungseinheit 1 ausgewertet. Die Fahrerunterstützungseinheit 1 bewertet, ob eine Korrekturrandbedingung erfüllt ist und erzeugt bzw. berechnet bei Erfüllung der Korrekturrandbedingung korrigierte Fahrersignale A und stellt diese dem Fahrdynamikregelungssystem 3 bereit. Beispielgemäß berücksichtigt die Beobachtereinheit 1 eine mittels wenigstens eines Sensors erfasste Fahrbahneigenschaft bzw. Fahrbahneigenschaftsinformation E der Straße W sowie zusätzlich eine von einem von Netzwerkdienst E' bereitgestellte Fahrbahneigenschaftsinformation.

Die Fahrerunterstützungseinheit 1 berechnet aus den Daten und Informationen C, D, E der Beobachtereinheit 2 ein Fahrspurbegrenzungsmodell bzw. ein Fahrspurrandverlauf und prüft im Zuge der Beurteilung der Korrekturrandbedingung, ob die aktuell mittels der Fahrersignale A vom Fahrer F bestimmte Fahrerwunschtrajektorie des Fahrzeugs zu einem Verlassen der Fahrspur oder Überschreitung der Fahrspurbegrenzung führen würde, wenn dies der Fall ist, liegt die Korrekturrandbedingung vor und die Fahrerunterstützungseinheit 1 berechnet korrigierte Fahrersignale B und wenn die Korrekturrandbedingung nicht vorliegt, werden keine korrigierten Fahrersignale B berechnet, sondern die ursprünglichen Fahrersignale A werden dem Fahrdynamikregelungssystem 3 bereitgestellt.

Die gestrichelt umrandeten Einheiten 1 und 2 bilden beispielgemäß das Fahrerunterstützungssystem.

Y veranschaulicht die Wirkung bzw. Beeinflussung durch die jeweiligen Signale der Einheiten auf die Fahrdynamik Y des Fahrzeugs in seiner Umgebung.

## Patentansprüche

1. Verfahren zur Unterstützung eines Fahrers (F) mittels eines Fahrerunterstützungssystems, wobei das Fahrerunterstützungssystem Eingabeinformationen des Fahrers und/oder Fahrervorgaben als Fahrersignale (A) in einer Fahrerunterstützungseinheit (1) auswertet und verarbeitet und korrigierte Fahrersignale (B) bereitstellt,
falls die Fahrerunterstützungseinheit (1) eine Korrekturrandbedingung als erfüllt bewertet,
wobei die Fahrerunterstützungseinheit (1) zur Auswertung der Korrekturrandbedingung und zur Erzeugung der korrigierten Fahrersignale (B) die Beobachtersignale (C, D, E) einer Beobachtereinheit nutzt, wobei die Beobachtersignale (C, D, E) abhängig sind von der aktuellen durch Fahrzeugsensoren erfassten Fahrzustandssituation und/oder wenigstens einer Fahrspurverlaufsinformation,
wobei die korrigierten Fahrersignale (B) einem Fahrdynamikregelungssystem (3) des Fahrzeugs bereit gestellt werden.

2. Verfahren nach Anspruch 1, **dadurch gekennzeichnet, dass** die Beobachtereinheit (2) Kartendaten und/oder Navigationsdaten (C) zum Fahrspurverlauf aufweist und/oder ihr bereitgestellt werden und dass eine GPS Position des Fahrzeugs der Beobachtereinheit (2) bereitgestellt wird, wobei zusätzlich insbesondere wenigstens eine Fahrbahneigenschaftsinformation (E) von einer zusätzlichen Sensor- und/oder Auswerteeinheit und/oder von einem Netzwerkdienst bereitgestellt wird.

3. Verfahren nach Anspruch 2, **dadurch gekennzeichnet, dass** die Fahrerunterstützungseinheit (1) aus den Daten und Informationen der Beobachtereinheit (C, D, E) ein Fahrspurbegrenzungsmodell und/oder einen Fahrspurrandverlauf berechnet und im Zuge der Beurteilung der Korrekturrandbedingung prüft, ob die aktuell mittels der Fahrersignale (A) vom Fahrer bestimmte Fahrerwunschtrajektorie des Fahrzeugs zu einem Verlassen der Fahrspur und/oder Überschreitung der Fahrspurbegrenzung führen würde, wenn dies der Fall ist, liegt die Korrekturrandbedingung vor und die Fahrerunterstützungseinheit berechnet/ erzeugt korrigierte Fahrersignale (B) und wenn die Korrekturrandbedingung nicht vorliegt, werden keine korrigierten Fahrersignale (B) berechnet/ erzeugt, sondern die ursprünglichen Fahrersignale (A) werden dem Fahrdynamikregelungssystem (3) bereitgestellt.

4. Verfahren nach Anspruch 3, **dadurch gekennzeichnet, dass** die korrigierten Fahrersignale (B) in der Fahrerunterstützungseinheit (1) so berechnet/ erzeugt werden, dass die aktuelle Trajektorie des Fahrzeugs im Wesentlichen auf die Mitte der Fahrspur oder einem mittleren Fahrspurband weist und dabei insbesondere das Fahrdynamikregelungssystem (3) mittels der korrigierten Fahrersignale (B) das Fahrzeug im Wesentlichen auf der Fahrspur hält.

5. Verfahren nach mindestens einem der Ansprüche 1 bis 4, **dadurch gekennzeichnet, dass** das Fahrerunterstützungssystem so ausgebildet ist, dass mittels einer definierten Fahrerüberstimmungseingabe die Fahrerunterstützungseinheit (1) deaktiviert werden kann, insbesondere jederzeit.

6. Verfahren nach mindestens einem der Ansprüche 1 bis 5, **dadurch gekennzeichnet, dass** die Überprüfung der Korrekturrandbedingung in der Fahrerunterstützungseinheit (1) zyklisch und/oder kontinuierlich erfolgt und wenn die Fahrersignale (A) eine definierte Anzahl an Zyklen oder einen definierten Zeitraum und/oder nach einem Eingriff des Fahrdynamikregelungssystems (3) basierend auf korrigierten Fahrersignalen (B), der Fahrer Fahrersignale (A) verursacht, welche die Korrekturrandbedingung erfüllen, dass dann die Fahrerunterstützungseinheit (1) deaktiviert wird.

7. Fahrerunterstützungssystem, insbesondere zur Ausführung eines Verfahrens gemäß einem der vorhergehenden Ansprüche, umfassend eine Fahrerunterstützungseinheit (1), welche Eingabeinformationen eines Fahrers und/oder Fahrervorgaben als Fahrersignale (A) auswertet und verarbeitet und korrigierte Fahrersignale (B) bereitstellt,
falls die Fahrerunterstützungseinheit (1) eine Korrekturrandbedingung (F) als erfüllt bewertet,
wobei die Fahrerunterstützungseinheit (1) zur Auswertung der Korrekturrandbedingung (F) und zur Erzeugung der korrigierten Fahrersignale (B) die Beobachtersignale (C, D, E) einer Beobachtereinheit (2) nutzt, wobei die Beobachtersignale (C, D, E) abhängig sind von der aktuellen durch Fahrzeugsensoren erfassten Fahrzustandssituation und einer Fahrspurverlaufsinformationen,
wobei die korrigierten Fahrersignale (B) einem Fahrdynamikregelungssystem (3) des Fahrzeugs bereit gestellt werden.
